(19) **Europäisches Patentamt / European Patent Office / Office européen des brevets**

(11) **EP 4 588 693 A1**

(12) # EUROPEAN PATENT APPLICATION

(43) Date of publication:
**23.07.2025 Bulletin 2025/30**

(21) Application number: **24152414.9**

(22) Date of filing: **17.01.2024**

(51) International Patent Classification (IPC):
**B60C 99/00** $^{(2006.01)}$   **G06F 30/15** $^{(2020.01)}$
**G06F 30/20** $^{(2020.01)}$   **G06F 119/14** $^{(2020.01)}$

(52) Cooperative Patent Classification (CPC):
**B60C 99/006; G06F 30/15; G06F 30/20;**
G06F 2111/10; G06F 2119/02; G06F 2119/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bridgestone Europe NV/SA
1930 Zaventem (BE)**

(72) Inventors:
• **Marino, Carlo Alberto
  00128 Roma (IT)**
• **Capobianco, Alessandro
  00128 Roma (IT)**
• **Corollaro, Alfredo
  00128 Roma (IT)**

(74) Representative: **Marchetti, Alessio
  Bridgestone Europe NV/SA - Italian Branch
  Technical Center
  Via del Fosso del Salceto, 13/15
  00128 Roma (IT)**

(54) **TYRE MODELS FOR SIMULATIONS ON WET SURFACES**

(57)    A computer-implemented method of predicting the behaviour of a vehicle tyre on a wet road surface is disclosed. The method comprises: providing a computer-implemented tyre model; inputting a vertical tyre load ($F_z$) and a longitudinal tyre velocity ($V_x$) to the tyre model; using the computer-implemented tyre model to calculate a predicted tyre grip in terms of the load-dependent friction coefficient ($\mu_x$, $\mu_y$) based on a sigmoid function that is dependent on the vertical tyre load ($F_z$) and on the longitudinal tyre velocity ($V_x$); and outputting the predicted tyre grip from the computer-implemented tyre model.

Fig. 1

**EP 4 588 693 A1**

## Description

### Technical Field

The present invention relates to computer-implemented methods of predicting the behaviour of a vehicle tyre on a wet road surface.

### Background

It is known that in his book Tire and Vehicle Dynamics published in 1987, Professor H. Pacejka presents the now well-known "Magic Formula" for modelling interaction between a vehicle tyre and the road. This empirical model predicts braking/traction and cornering force dependent on longitudinal and lateral slips, vertical load and camber angle.

There are various commercial software products available to run vehicle simulations to assess ride and handling performance, which are semi-empirical tire performance models based on the Pacejka Magic Formula. These vehicle simulations are limited to performance on dry road surfaces only. The Magic Formula approach has not been found to give a good correlation with experimental results for a tyre running on a wet surface.

The applicant's previous application published as WO2023/073227A1 describes adapting the Magic Formula model for wet surfaces based on experimental data.

The present invention seeks to provide an improved model for predicting tyre behaviour on wet surfaces.

### Summary of the Invention

The inventors have found that an improved model can be obtained using a sigmoid function that is dependent on the vertical tyre load ($F_z$) and on the longitudinal tyre velocity ($V_x$).

According to a first aspect of the present invention there is provided a computer-implemented method of predicting the behaviour of a vehicle tyre on a wet road surface, the method comprising:

providing a computer-implemented tyre model;
inputting a vertical tyre load ($F_z$) and a longitudinal tyre velocity ($V_x$) to the tyre model;
using the computer-implemented tyre model to calculate a predicted tyre grip in terms of the load-dependent friction coefficient ($\mu_x$, $\mu_y$) based on a sigmoid function that is dependent on the vertical tyre load ($F_z$) and on the longitudinal tyre velocity ($V_x$); and
outputting the predicted tyre grip from the computer-implemented tyre model.

The use of a sigmoid function is consistent with the experimental results that the inventors have obtained as well as the scientific literature. For example, in the bearings field, the Stribeck Curve is a well-known concept that represents the friction behaviour in lubricated contacts as a function of viscosity, entrainment speed and load. In the present invention the use of a sigmoid function with its characteristic "S" shaped curve is consistent with the shape of the Stribeck Curve. Using experimental data, parameters or coefficients can be determined that match the sigmoid curve to the data for grip (peak force) plotted against longitudinal velocity.

In this way, a tyre model can be obtained which is able to predict the behaviour of a tyre in wet conditions more accurately, taking accurate account of the significant effect on grip that the longitudinal tyre velocity ($V_x$) has.

The predicted tyre grip output from the computer-implemented tyre model may be used in vehicle simulations to predict tyre behaviour on a wet road in a way that has not previously been achieved. This can reduce the amount of physical testing needed on tyres.

In one preferred form, in the sigmoid function, e is raised to the power of a term which is dependent on the vertical tyre load ($F_z$) and longitudinal tyre velocity ($V_x$).

Preferably, in the sigmoid function, the term is a first term, and the first term includes a second term which is dependent on the longitudinal tyre velocity ($V_x$) and a third term which is dependent on the vertical tyre load ($F_z$), and in the first term, the third term is subtracted from the second term.

Preferably, the sigmoid function is a logistic function.

In one preferred form, the tyre model calculates predicted tyre grip in terms of the longitudinal or lateral load-dependent friction coefficient ($\mu_x$, $\mu_y$) using one of the two following relationships:

$$\mu_y = \left(p_{Dy1} + p_{Dy2} \cdot df_z\right) \cdot \frac{1}{1 + e^{p_{VDy1}\left(dv - \left(p_{VDy2} + p_{VDy3} \cdot dfz\right)\right)}} + p_{VDy4}$$

$$\mu_x = (p_{Dx1} + p_{Dx2} \cdot df_z) \cdot \frac{1}{1 + e^{p_{VDx1}(dv - (p_{VDx2} + p_{VDx3} \cdot dfz))}} + p_{VDx4}$$

where:

$p_{Dy1}$, $p_{Dy2}$, $p_{VDy1}$, $p_{VDy2}$, $p_{VDy3}$, $p_{VDy4}$, $p_{Dx1}$, $p_{Dx2}$, $p_{VDx1}$, $p_{VDx2}$, $p_{VDx3}$, $p_{VDx4}$ are dimensionless coefficients;

$$df_z = \frac{F_z - F_{z0}}{F_{z0}}$$

$$dv = \frac{V - V_0}{V_0}$$

$F_{zo}$ is nominal rated wheel load; and
$V_0$ is reference velocity.

In one preferred form, the method further comprises:

using the computer-implemented tyre model to calculate a predicted longitudinal slip or cornering stiffness ($K_x$, $K_y$) dependent on the vertical tyre load ($F_z$) and on the longitudinal tyre velocity ($V_x$); and
outputting the predicted longitudinal slip or cornering stiffness ($K_x$, $K_y$) from the computer-implemented tyre model.

In one preferred form, the tyre model calculates the predicted longitudinal slip or cornering stiffness ($K_x$, $K_y$) using one of the two following relationships:

$$K_y = p_{Ky1} \cdot F_{z0} \cdot \sin\left[2\tan^{-1}\left(\frac{F_z}{p_{Ky2}.F_{z0}}\right)\right] \cdot (1 + p_{VKy1} \cdot dv)$$

$$K_x = F_z(p_{Kx1} + p_{Kx2} \cdot df_z) \cdot e^{p_{Kx3} \cdot df_z} \cdot (1 + p_{VKx1} \cdot dv)$$

where:

$p_{Ky1}$, $p_{Ky2}$, $p_{VKy1}$, $p_{Kx1}$, $p_{Kx2}$, $p_{Kx3}$, $p_{VKx1}$ are dimensionless coefficients;

$$df_z = \frac{F_z - F_{z0}}{F_{z0}}$$

$$dv = \frac{V - V_0}{V_0}$$

$F_{zo}$ is nominal rated wheel load; and
$V_0$ is reference velocity.

Preferably, the computer-implemented tyre model is a Pacejka Magic Formula tyre model.
The method may comprise providing a computer-implemented tyre model that includes one or more dimensionless coefficients that have been pre-calculated based on experimental data collected for a given tyre on a wet road surface.
In the method, preferably, the one or more dimensionless coefficients have been pre-calculated based on experimental data collected for a given tyre on a wet road surface at multiple different longitudinal tyre velocities.
The method may comprise:

inputting a longitudinal tyre velocity ($V_x$) to the tyre model in real time; and
outputting the predicted tyre grip and/or longitudinal slip or cornering stiffness from the computer-implemented tyre model in real time.

The method may comprise:

inputting a slip angle ($\alpha$) or longitudinal slip ratio ($\kappa$) to the tyre model;
using the computer-implemented tyre model to calculate a predicted tyre lateral or longitudinal force ($F_y$, $F_x$) being dependent on the slip angle ($\alpha$) or longitudinal slip ratio ($\kappa$); and
outputting the predicted tyre lateral or longitudinal force ($F_y$, $F_x$).

According to a second aspect of the present invention there is provided a computer system comprising means for carrying out the method for predicting the behaviour of a vehicle tyre on a wet road surface according to the first aspect.

In the computer system, preferably, the means comprises a processor and a tangible memory storing computer-executable instructions that, when executed by the processor, cause the computer system to implement the method.

Preferably, the memory includes one or more dimensionless coefficients of the tyre model.

Preferably, the one or more dimensionless coefficients have been pre-calculated based on experimental data collected for a given tyre on a wet road surface, preferably at multiple different longitudinal tyre velocities.

According to a third aspect of the present invention there is provided a vehicle driving simulator comprising a computer system according to the second aspect.

According to a fourth aspect of the present invention there is provided a computer program product comprising instructions, which, when the program is executed by a computer, cause the computer to implement a method according to the first aspect.

Preferable features of the first aspect are equally applicable to any of the second to fourth aspects, and vice versa.

In at least some embodiments, one or more dimensionless coefficients may be dependent on a tyre type. The tyre type may include at least one of a tyre size, tyre manufacturer, tyre age, tyre tread pattern (and its design), tyre finish, etc. The one or more dimensionless coefficients may have been calculated based on experimental data collected for that particular tyre type on a wet road surface.

Methods as disclosed herein may find use for a variety of purposes, including the running of vehicle simulations, and implementation of driving simulators that allow a human driver to virtually drive a vehicle on a wet road. As the method takes the vehicle speed as an input to the tyre model, the output(s) provided by the method can adapt in real-time to changes in speed. Thus, in at least some embodiments, the method comprises: inputting a longitudinal tyre velocity ($V_x$) to the tyre model in real time; and outputting the predicted tyre grip and/or longitudinal slip or cornering stiffness from the computer-implemented tyre model in real time.

The computer-implemented tyre models disclosed herein have been found to provide accurate outputs across a range of typical vehicle speeds, when compared to experimental data obtained for tyres on wet roads. In at least some embodiments, inputting a longitudinal tyre velocity ($V_x$) to the tyre model comprises: selecting a longitudinal tyre velocity ($V_x$) in the range of 30-70 kph.

According to the present disclosure, what is meant by a wet road surface is a road surface covered by a uniform and constant 1.5 mm layer of water.

According to a second aspect of the present invention there is provided a computer system for predicting the behaviour of a vehicle tyre on a wet road surface, the system implementing a method as disclosed herein. The computer system may comprise a processor and a tangible memory storing computer-executable instructions that, when executed by the processor, cause the system to implement any of the methods as disclosed herein.

According to a further aspect of the present invention there is provided a vehicle driving simulator comprising such a computer system. As mentioned above, in at least some embodiments the vehicle speed may be input to the tyre model in real time. In at least some embodiments, the vehicle driving simulator may comprise a driver interface configured for a human driver to input a vehicle speed to the computer system in real time. This vehicle speed may be taken by the computer system (i.e. a processor thereof) and used to input a longitudinal tyre velocity ($V_x$) to the tyre model in real time.

According to a further aspect of the present invention there is provided a computer software product configured to implement any of the methods as disclosed herein.

**Brief Description of the Drawings**

Preferred embodiments of the invention will now be described, purely by way of example, with reference to the drawings in which:

Fig. 1 shows a vehicle tyre and some of the main parameters involved in a computer-implemented tyre model;

Figs. 2A-2C show experimental data for three different tyres with longitudinal tyre velocity plotted against measured lateral grip for different loads on the tyre;

Figs. 3A-3C show the experimental data for the three tyres of Figs. 2A-2C plotted with data obtained from a computer-implemented tyre model according to a first embodiment of the present invention;

Fig. 4 shows experimental data for a fourth tyre plotted with data obtained from the computer-implemented tyre model according to the first embodiment of the present invention;

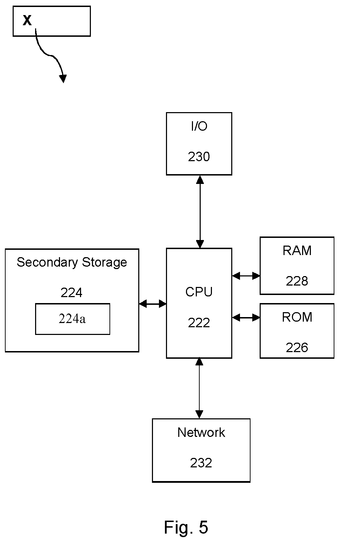

Fig. 5 is a block diagram showing a technical architecture of a server X; and

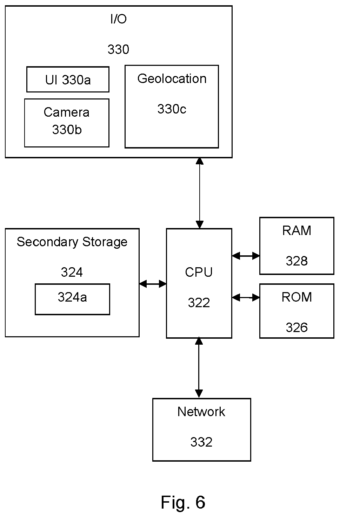

Fig. 6 is a block diagram showing a technical architecture of a communication device 1.

## Detailed Description

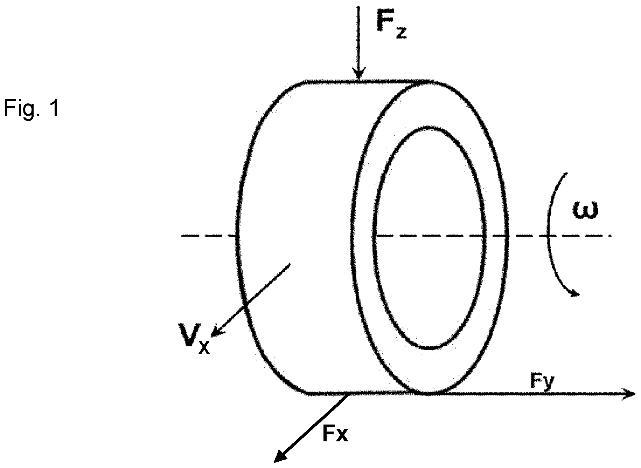

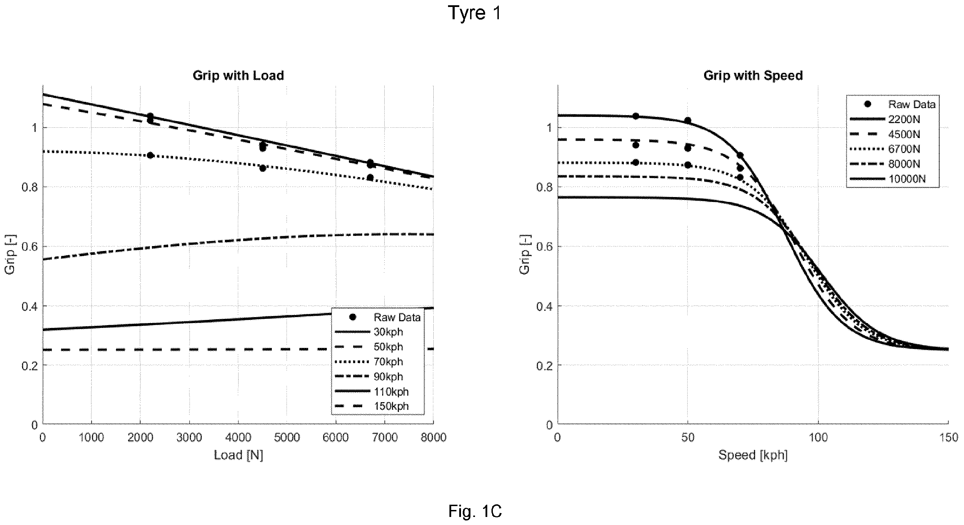

It is shown in Figure 1 how a vehicle tyre on a wet road surface is under the influence of a vertical tyre load $F_z$ and has a longitudinal tyre velocity $V_x$ as determined by the vehicle speed. The lateral force $F_y$ is linked to the vertical tyre load $F_z$ through the lateral load-dependent friction coefficient $\mu_y$, which acts to dictate the tyre's grip on the road surface. The lateral force $F_y$ is also known as the cornering force. Similarly, the longitudinal (braking) force $F_x$ is linked to the vertical tyre load $F_z$ through the longitudinal load-dependent friction coefficient $\mu_x$, which acts to dictate the tyre's grip on the road surface.

According to the methods described herein, a computer-implemented tyre model is used to calculate a predicted tyre grip in terms of the load-dependent friction coefficient $\mu_x$, $\mu_y$ based on a sigmoid function that is dependent on the vertical tyre load $F_z$ and on the longitudinal tyre velocity $V_x$.

It can be seen that longitudinal tyre velocity $V_x$ is distinct from the tyre's angular velocity $\omega$.

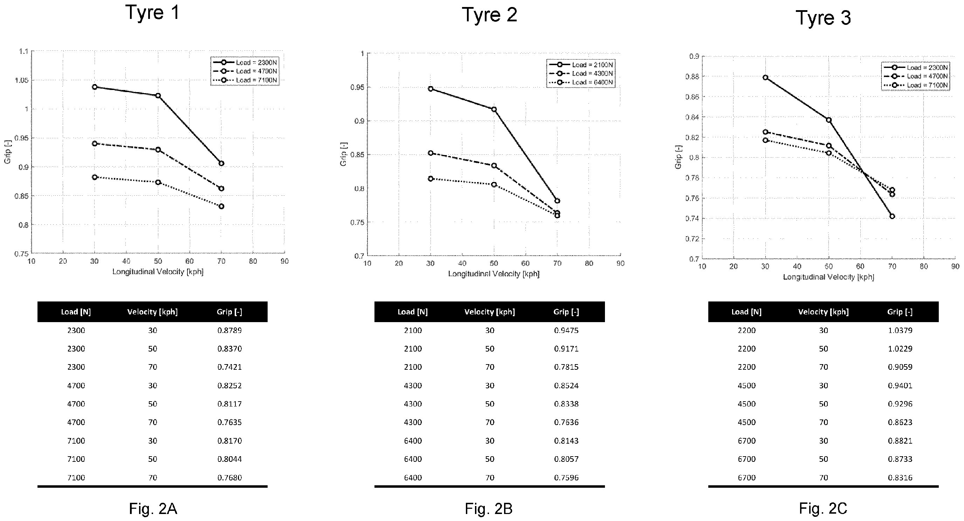

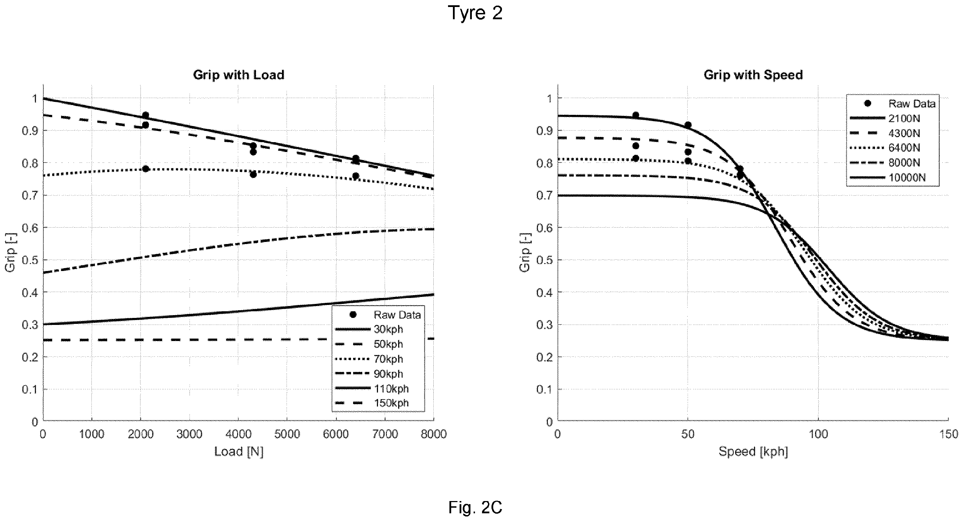

Figs. 2A-2C show experimental data for three different Bridgestone tyres ("Tyre 1", "Tyre 2" and "Tyre 3") showing longitudinal tyre velocity ($V_x$) plotted against measured peak lateral grip ($F_y/F_z$) for different loads ($F_z$) on the tyre. (Lateral force $F_y$ varies with slip angle, and therefore the peak lateral force $F_y$ is used). The data was obtained from testing Tyres 1-3 on a tyre testing machine in wet conditions at 30kph, 50kph and 70kph at different loads. The data was also obtained from testing each tyre at inclination (camber) angles of 0°, -5° and +5°. In Figs. 2A-2C the data for each tyre shows an increasingly fast drop in grip as the longitudinal velocity increases.

The inventors realised that a model could be designed which would give a better fit to the experimental data than the models disclosed in WO2023/073227A1. The inventors found that this can be achieved by using a sigmoid function that is dependent on the vertical tyre load $F_z$ and on the longitudinal tyre velocity $V_x$. The use of a sigmoid function is consistent with the experimental results that the inventors have obtained as well as the scientific literature (in particular, the Stribeck Curve mentioned above).

In this way, a computer-implemented tyre model according to the first embodiment of the present invention was designed. This tyre model predicts lateral load-dependent friction coefficient $\mu_y$ in pure side slip based on a sigmoid function that is dependent on the vertical tyre load ($F_z$) and on the longitudinal tyre velocity ($V_x$):

$$\mu_y = (p_{Dy1} + p_{Dy2} \cdot df_z) \cdot \frac{1}{1 + e^{p_{VDy1}(dv - (p_{VDy2} + p_{VDy3} \cdot dfz))}} + p_{VDy4}$$

$$(1)$$

where:

$p_{Dy1}$, $p_{Dy2}$, $p_{VDy1}$, $p_{VDy2}$, $p_{VDy3}$, $p_{VDy4}$ are dimensionless coefficients;

$$df_z = \frac{F_z - F_{z0}}{F_{z0}}$$

$$dv = \frac{V - V_0}{V_0}$$

$F_{zo}$ is nominal rated wheel load; and
$V_0$ is reference velocity.

In Equation 1 the term
$$\frac{1}{1+e^{p_{VDy1}\left(dv-\left(p_{VDy2}+p_{VDy3}\cdot dfz\right)\right)}}+p_{VDy4}$$
includes the sigmoid function, and is the part that differs from the tyre models disclosed in WO2023/073227A1.

The computer-implemented tyre model also includes the following equation for cornering stiffness $K_y$ in pure side slip:

$$K_y = p_{Ky1} \cdot F_{z0} \cdot \sin\left[2\tan^{-1}\left(\frac{F_z}{p_{Ky2}\cdot F_{z0}}\right)\right] \cdot (1 + p_{VKy1} \cdot dv)$$

$$(2)$$

where:

$p_{Ky1}$, $p_{Ky2}$, $p_{VKy1}$, are dimensionless coefficients;

$$df_z = \frac{F_z - F_{z0}}{F_{z0}}$$

$$dv = \frac{V - V_0}{V_0}$$

$F_{zo}$ is nominal rated wheel load; and
$V_0$ is reference velocity.

In Equations (1) and (2), the effect of camber is neglected, but the equations can be modified to take account of camber, if desired.

In the computer-implemented tyre model, as with the original (1987) Magic Formula model, lateral force $F_y$ in pure side slip is calculated from the following equation:

$$F_y = D_y \cdot \sin\left(C_y \tan^{-1}\left(B_y(\alpha + S_{Hy})\right) - E_y\left(B_y(\alpha + S_{Hy}) - \tan^{-1}\left(B_y(\alpha + S_{Hy})\right)\right)\right) + S_{Vy}$$

$$(3)$$

where:

$B_y$, $C_y$, $D_y$, $E_y$ are dimensionless coefficients;
$\alpha$ is slip angle in degrees; and
$S_{Hy}$ and $S_{Vy}$ are horizontal and vertical shifts.

In Equation (3) above, $D_y$ is dependent on, among other things, lateral load-dependent friction coefficient $\mu_y$ which is obtained from Equation (1) above. In addition, $B_y$ is dependent on, among other things, cornering stiffness $K_y$ which is obtained from Equation (2) above.

Data from the experiments and the Equations (1) to (3) above were used to obtain values for the various dimensionless coefficients in Equations (1) to (3). After that, the model was used to obtain values of peak lateral grip ($F_y/F_z$) for different longitudinal tyre velocities ($V_x$) and loads ($F_z$) on the tyre.

Figs. 3A-3C show the experimental data for the three tyres of Figs. 2A-2C plotted with data obtained from a computer-implemented tyre model according to the first embodiment of the present invention. In Fig. 3A, which relates to Tyre 1, it can be seen that there is a good fit between the dots (which show the raw data) and the curves (which show the data obtained from the tyre model). The characteristic "S" shape of the sigmoid curve is visible in the right hand graph of Grip (peak lateral grip $F_y/F_z$) against Speed (longitudinal tyre velocity $V_x$). Figs. 3B-3C, which relate to Tyres 2 and 3, show similar good fits between the experimental data and data obtained from the tyre model.

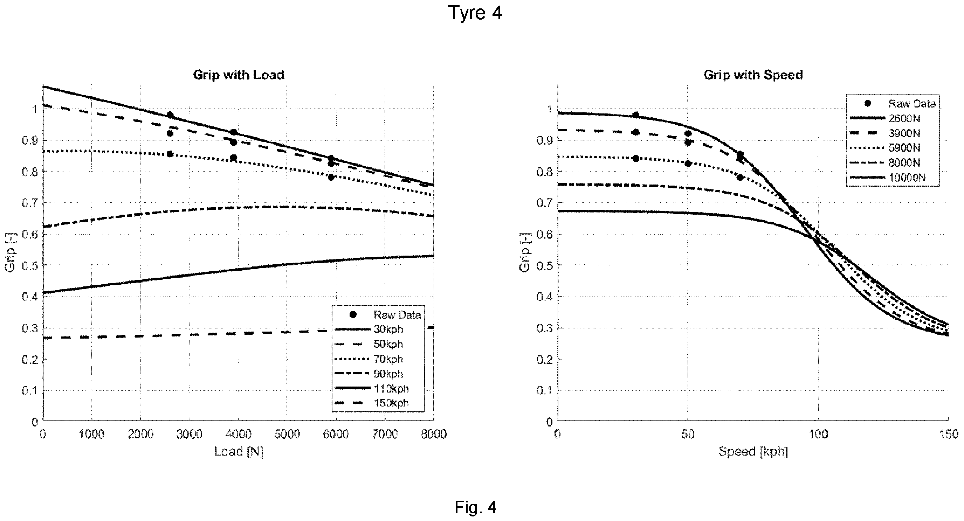

Fig. 4 relates to a different tyre (Tyre 4), and again shows a good fit between the experimental data and data obtained from the tyre model.

With this tyre model a more accurate prediction of tyre behaviour on wet road surfaces is now possible under a range of different speeds and loading conditions.

Although the experimental data and equations referred to above relate to lateral forces, the invention is also applicable to longitudinal forces, and the following equations can be used for longitudinal load-dependent friction coefficient $\mu_x$, and longitudinal slip stiffness $K_x$:

$$\mu_x = (p_{Dx1} + p_{Dx2} \cdot df_z) \cdot \frac{1}{1 + e^{p_{VDx1}(dv-(p_{VDx2}+p_{VDx3}\cdot dfz))}} + p_{VDx4}$$

$$( 4 )$$

where:

$p_{Dx1}$, $p_{Dx2}$, $p_{VDx1}$, $p_{VDx2}$, $p_{VDx3}$, $p_{VDx4}$ are dimensionless coefficients;

$$df_z = \frac{F_z - F_{Z0}}{F_{Z0}}$$

$$dv = \frac{V - V_0}{V_0}$$

$F_{zo}$ is nominal rated wheel load; and
$V_0$ is reference velocity;

$$K_x = F_z(p_{Kx1} + p_{Kx2} \cdot df_z) \cdot e^{p_{Kx3} \cdot df_z} \cdot (1 + p_{VKx1} \cdot dv)$$

$$( 5 )$$

where:

$p_{Kx1}$, $p_{Kx2}$, $p_{Kx3}$, $p_{VKx1}$ are dimensionless coefficients;

$$df_z = \frac{F_z - F_{Z0}}{F_{Z0}}$$

$$dv = \frac{V - V_0}{V_0}$$

$F_{zo}$ is nominal rated wheel load; and
$V_0$ is reference velocity.

In each of the Equations 1, 2, 4 and 5 above, there are included some dimensionless coefficients $p_{Dy1}$, $p_{Dy2}$, $p_{Ky1}$, $p_{Ky2}$, $p_{Dx1}$, $p_{Dx2}$, $p_{Kx1}$, $p_{Kx2}$, $p_{Kx3}$ that depend on vertical tyre load $F_z$. It is already known for tyre models based on the "Magic Formula" to include such dimensionless coefficients, but previously these coefficients were pre-calculated based on experimental data collected on a dry road surface. In the present examples, the dimensionless coefficients $p_{Dy1}$, $p_{Dy2}$, $p_{Ky1}$, $p_{Ky2}$, $p_{Dx1}$, $p_{Dx2}$, $p_{Kx1}$, $p_{Kx2}$, $p_{Kx3}$ are pre-calculated based on experimental data collected for a given tyre type on a wet road surface, and thus differ from those already known for tyre models based on the "Magic Formula". This follows from a recognition that the grip level of a tyre (i.e. the lateral friction coefficient) reaches different values on dry surfaces as compared to wet surfaces, thus the absolute values of these coefficients change if one tests a tyre on a surface dry or on a wet surface. The experimental data used to pre-calculate these dimensionless coefficients may relate to a single vehicle speed or multiple vehicle speeds, for example at least three different vehicle speeds.

In each of the Equations 1, 2, 4 and 5 above, there are included some further dimensionless coefficients $p_{VDy1}$, $p_{VDy2}$, $p_{VDy3}$, $p_{VDy4}$, $p_{VKy1}$, $p_{VDx1}$, $p_{VDx2}$, $p_{VDx3}$, $p_{VDx4}$, $p_{VKx1}$ in the additional speed-dependent terms. These further dimensionless coefficients are pre-calculated based on experimental data collected for a given tyre type on a wet road surface. Furthermore, due to the speed-dependence of these additional terms, the experimental data used to pre-calculate these dimensionless coefficients may relate to multiple vehicle speeds, for example at least three different vehicle speeds.

The way in which such dimensionless coefficients are pre-calculated from experimental data is generally known in the art. For example, a least squares fitting or other iterative fitting technique may be employed.

The tyre model has various potential uses. It can be used, for example in the design of tyres; in the ECU of a vehicle to inform or warn the driver of how the tyres are behaving; or in-vehicle simulations to simulate more accurately how the tyres behave under real-world conditions.

Taking use in the ECU of a vehicle as an example, the ECU may include software which performs the method of predicting the behaviour of a vehicle tyre on a wet road surface. Here, the ECU calculates the lateral or longitudinal force ($F_y$, $F_x$) on the tyre. The ECU may then be configured to warn the driver if, for example, the vehicle is being driven in a way that the lateral force required to corner is likely to exceed that which the tyre can produce.

The ECU includes a memory on which is stored dimensionless coefficients of the tyre model.

As used in this application, the terms "component," "module," "engine," "system," "apparatus," "interface," or the like are generally intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a controller and the controller can be a component. One or more components may reside within a process and/or thread of execution and a component may be localized on one computer and/or distributed between two or more computers.

Furthermore, the claimed subject matter may be implemented as a method, apparatus, or article of manufacture using standard programming and/or engineering techniques to produce software, firmware, hardware, or any combination thereof to control a computer to implement the disclosed subject matter. For instance, the claimed subject matter may be implemented as a computer-readable medium embedded with a computer executable program, which encompasses a computer program accessible from any computer-readable storage device or storage media. For example, computer readable media can include but are not limited to magnetic storage devices (e.g., hard disk, floppy disk, magnetic strips), optical disks (e.g., compact disk (CD), digital versatile disk (DVD)), smart cards, and flash memory devices (e.g., card, stick, key drive).

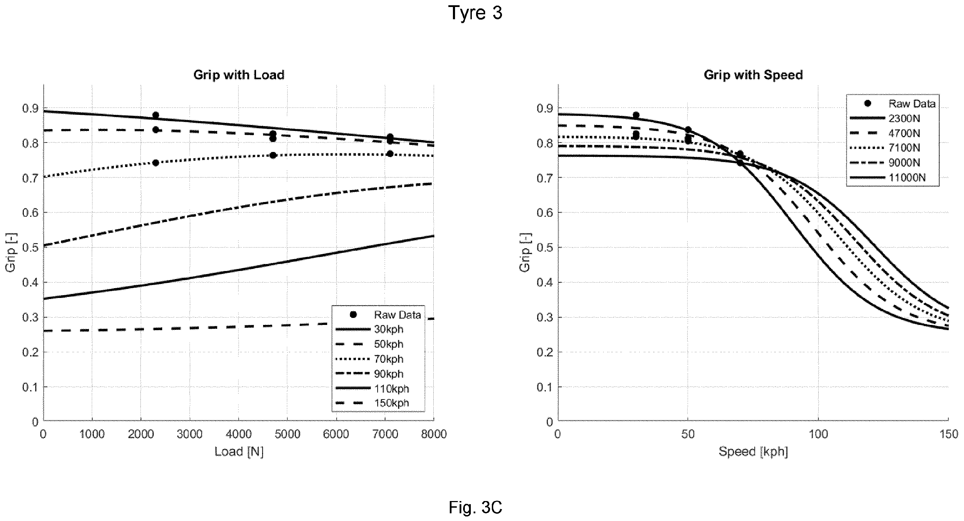

Fig. 3 is a block diagram showing a technical architecture of a server X.

The technical architecture includes a processor 222 (which may be referred to as a central processor unit or CPU) that is in communication with memory devices including secondary storage 224 (such as disk drives), read only memory (ROM) 226, random access memory (RAM) 228. The processor 222 may be implemented as one or more CPU chips. The technical architecture may further comprise input/output (I/O) devices 230, and network connectivity devices 232.

The secondary storage 224 is typically made up of one or more disk drives or tape drives and is used for non-volatile storage of data and as an over-flow data storage device if RAM 228 is not large enough to hold all working data. Secondary storage 224 may be used to store programs which are loaded into RAM 228 when such programs are selected for execution.

In this embodiment, the secondary storage 224 has an order processing component 224a comprising non-transitory instructions operative by the processor 222 to perform various operations of the method of the present disclosure. The ROM 226 is used to store instructions and perhaps data which are read during program execution. The secondary storage 224, the RAM 228, and/or the ROM 226 may be referred to in some contexts as computer readable storage media and/or non-transitory computer readable media.

I/O devices 230 may include printers, video monitors, liquid crystal displays (LCDs), plasma displays, touch screen displays, keyboards, keypads, switches, dials, mice, track balls, voice recognizers, card readers, paper tape readers, or other well-known input devices.

The network connectivity devices 232 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards that promote radio communications using protocols such as code division multiple access (CDMA), global system for mobile communications (GSM), long-term evolution (LTE), worldwide interoperability for microwave access (WiMAX), near field communications (NFC), radio frequency identity (RFID), and/or other air interface protocol radio transceiver cards, and other well-known network devices. These network connectivity devices 232 may enable the processor 222 to communicate with the Internet or one or more intranets. With such a network connection, it is contemplated that the processor 222 might receive information from the network, or might output information to the network in the course of performing the above-described method operations. Such information, which is often represented as a sequence of instructions to be executed using processor 222, may be received from and outputted to the network, for example, in the form of a computer data signal embodied in a carrier wave.

The processor 222 executes instructions, codes, computer programs, scripts which it accesses from hard disk, floppy disk, optical disk (these various disk based systems may all be considered secondary storage 224), flash drive, ROM 226, RAM 228, or the network connectivity devices 232. While only one processor 222 is shown, multiple processors may be present. Thus, while instructions may be discussed as executed by a processor, the instructions may be executed simultaneously, serially, or otherwise executed by one or multiple processors.

Although the technical architecture is described with reference to a computer, it should be appreciated that the technical architecture may be formed by two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the technical architecture 220 to provide the functionality of a number of servers that is not directly bound to the number of computers in the technical architecture 220. In an embodiment, the functionality disclosed above may be provided by executing the application and/or applications in a cloud computing environment. Cloud computing may comprise providing computing services via a network connection using dynamically scalable computing resources. A cloud computing environment may be established by an enterprise and/or may be hired on an as-needed basis from a third party provider.

It is understood that by programming and/or loading executable instructions onto the technical architecture, at least one of the CPU 222, the RAM 228, and the ROM 226 are changed, transforming the technical architecture in part into a specific purpose machine or apparatus having the novel functionality taught by the present disclosure. It is fundamental to the electrical engineering and software engineering arts that functionality that can be implemented by loading executable software into a computer can be converted to a hardware implementation by well-known design rules.

Fig. 4 is a block diagram showing a technical architecture of a communication device 1. It is envisaged that in embodiments, the communication device 1 will be a smartphone or tablet device.

The technical architecture includes a processor 322 (which may be referred to as a central processor unit or CPU) that is in communication with memory devices including secondary storage 324 (such as disk drives or memory cards), read only memory (ROM) 326, random access memory (RAM) 328. The processor 322 may be implemented as one or more CPU chips. The technical architecture further comprises input/output (I/O) devices 330, and network connectivity devices 332.

The I/O devices comprise a user interface (UI) 330a, a camera 330b and a geolocation module 330c. The UI 330a may comprise a touch screen, keyboard, keypad or other known input device. The camera 330b allows a user to capture images and save the captured images in electronic form. The geolocation module 330c is operable to determine the geolocation of the communication device using signals from, for example global positioning system (GPS) satellites.

The secondary storage 324 is typically made up of a memory card or other storage device and is used for non-volatile storage of data and as an over-flow data storage device if RAM 328 is not large enough to hold all working data. Secondary storage 324 may be used to store programs which are loaded into RAM 328 when such programs are selected for execution.

In this embodiment, the secondary storage 324 has an order generation component 324a, comprising non-transitory instructions operative by the processor 322 to perform various operations of the method of the present disclosure. The ROM 326 is used to store instructions and perhaps data which are read during program execution. The secondary storage 324, the RAM 328, and/or the ROM 326 may be referred to in some contexts as computer readable storage media and/or non-transitory computer readable media.

The network connectivity devices 332 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards that promote radio communications using protocols such as code division multiple access (CDMA), global system for mobile communications (GSM), long-term evolution (LTE), worldwide interoperability for microwave access (WiMAX), near field communications (NFC), radio frequency identity (RFID), and/or other air interface protocol radio transceiver cards, and other well-known network devices. These network connectivity devices 332 may enable the processor 322 to communicate with the Internet or one or more intranets. With such a network connection, it is contemplated that the processor 322 might receive information from the network, or might output information to the network in the course of performing the above-described method operations. Such information, which is often represented as a sequence of instructions to be executed using processor 322, may be received from and outputted to the network, for example, in the form of a computer data signal embodied in a carrier wave.

The processor 322 executes instructions, codes, computer programs, scripts which it accesses from hard disk, floppy disk, optical disk (these various disk based systems may all be considered secondary storage 324), flash drive, ROM 326, RAM 328, or the network connectivity devices 332. While only one processor 322 is shown, multiple processors may be present. Thus, while instructions may be discussed as executed by a processor, the instructions may be executed simultaneously, serially, or otherwise executed by one or multiple processors.

Preferred embodiments of the invention have been described purely by way of example, and various modifications, additions and/or omissions will present themselves to one skilled in the art, all of which form part of the invention.

**Claims**

1. A computer-implemented method of predicting the behaviour of a vehicle tyre on a wet road surface, the method comprising:

   providing a computer-implemented tyre model;
   inputting a vertical tyre load ($F_z$) and a longitudinal tyre velocity ($V_x$) to the tyre model;
   using the computer-implemented tyre model to calculate a predicted tyre grip in terms of the load-dependent friction coefficient ($\mu_x$, $\mu_y$) based on a sigmoid function that is dependent on the vertical tyre load ($F_z$) and on the longitudinal tyre velocity ($V_x$); and
   outputting the predicted tyre grip from the computer-implemented tyre model.

2. A method of claim 1, wherein, in the sigmoid function, e is raised to the power of a term which is dependent on the vertical tyre load ($F_z$) and longitudinal tyre velocity ($V_x$).

3. A method of claim 2, wherein, in the sigmoid function, the term is a first term, and the first term includes a second term which is dependent on the longitudinal tyre velocity ($V_x$) and a third term which is dependent on the vertical tyre load ($F_z$), and
   in the first term, the third term is subtracted from the second term.

4. A method of claim 1, 2 or 3, wherein the sigmoid function is a logistic function.

5. A method of any preceding claim, wherein the tyre model calculates predicted tyre grip in terms of the longitudinal or lateral load-dependent friction coefficient ($\mu_x$, $\mu_y$) using one of the two following relationships:

$$\mu_y = \left(p_{Dy1} + p_{Dy2} \cdot df_z\right) \cdot \frac{1}{1 + e^{p_{VDy1}\left(dv - (p_{VDy2} + p_{VDy3} \cdot dfz)\right)}} + p_{VDy4}$$

$$\mu_x = \left(p_{Dx1} + p_{Dx2} \cdot df_z\right) \cdot \frac{1}{1 + e^{p_{VDx1}\left(dv - (p_{VDx2} + p_{VDx3} \cdot dfz)\right)}} + p_{VDx4}$$

   where:

   PDy1, PDy2, PVDy1, PVDy2, PVDy3, PVDy4, $p_{Dx1}$, PDx2, $p_{VDx1}$, PVDx2, PVDx3, PVDx4 are dimensionless coefficients;

$$df_z = \frac{F_Z - F_{Z0}}{F_{Z0}}$$

$$dv = \frac{V - V_0}{V_0}$$

   $F_{zo}$ is nominal rated wheel load; and
   $V_0$ is reference velocity.

6. A method of any of claims 1 to 5, further comprising:

   using the computer-implemented tyre model to calculate a predicted longitudinal slip or cornering stiffness ($K_x$, $K_y$) dependent on the vertical tyre load ($F_z$) and on the longitudinal tyre velocity ($V_x$); and
   outputting the predicted longitudinal slip or cornering stiffness ($K_x$, $K_y$) from the computer-implemented tyre model.

7. A method of any preceding claim, wherein the computer-implemented tyre model is a Pacejka Magic Formula tyre model.

8. The computer-implemented method of any preceding claim, comprising:
providing a computer-implemented tyre model that includes one or more dimensionless coefficients that have been pre-calculated based on experimental data collected for a given tyre on a wet road surface.

9. The computer-implemented method of claim 8, wherein the one or more dimensionless coefficients have been pre-calculated based on experimental data collected for a given tyre on a wet road surface at multiple different longitudinal tyre velocities.

10. The computer-implemented method of any preceding claim, comprising:

inputting a longitudinal tyre velocity ($V_x$) to the tyre model in real time; and
outputting the predicted tyre grip and/or longitudinal slip or cornering stiffness from the computer-implemented tyre model in real time.

11. A computer system comprising means for carrying out the method for predicting the behaviour of a vehicle tyre on a wet road surface according to any preceding claim.

12. The computer system of claim 11, the means comprising a processor and a tangible memory storing computer-executable instructions that, when executed by the processor, cause the computer system to implement the method.

13. The computer system of claim 12, wherein the memory includes one or more dimensionless coefficients of the tyre model.

14. A vehicle driving simulator comprising a computer system according to claim 12 or 13.

15. A computer program product comprising instructions, which, when the program is executed by a computer, cause the computer to implement a method according to any of claims 1-10.

Fig. 1

## Tyre 1

| Load [N] | Velocity [kph] | Grip [-] |
|---|---|---|
| 2300 | 30 | 0.8789 |
| 2300 | 50 | 0.8370 |
| 2300 | 70 | 0.7421 |
| 4700 | 30 | 0.8252 |
| 4700 | 50 | 0.8117 |
| 4700 | 70 | 0.7635 |
| 7100 | 30 | 0.8170 |
| 7100 | 50 | 0.8044 |
| 7100 | 70 | 0.7680 |

Fig. 2A

## Tyre 2

| Load [N] | Velocity [kph] | Grip [-] |
|---|---|---|
| 2100 | 30 | 0.9475 |
| 2100 | 50 | 0.9171 |
| 2100 | 70 | 0.7815 |
| 4300 | 30 | 0.8524 |
| 4300 | 50 | 0.8338 |
| 4300 | 70 | 0.7636 |
| 6400 | 30 | 0.8143 |
| 6400 | 50 | 0.8057 |
| 6400 | 70 | 0.7596 |

Fig. 2B

## Tyre 3

| Load [N] | Velocity [kph] | Grip [-] |
|---|---|---|
| 2200 | 30 | 1.0379 |
| 2200 | 50 | 1.0229 |
| 2200 | 70 | 0.9059 |
| 4500 | 30 | 0.9401 |
| 4500 | 50 | 0.9296 |
| 4500 | 70 | 0.8623 |
| 6700 | 30 | 0.8821 |
| 6700 | 50 | 0.8733 |
| 6700 | 70 | 0.8316 |

Fig. 2C

Fig. 1C

EP 4 588 693 A1

Tyre 2

**Grip with Speed**

**Grip with Load**

Fig. 2C

# Tyre 3

Fig. 3C

EP 4 588 693 A1

16

Tyre 4

Fig. 4

Fig. 5

Fig. 6

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 173 906 A1 (BRIDGESTONE EUROPE NV SA [BE]) 3 May 2023 (2023-05-03) <br> * abstract * <br> * [0018] <br> equations 2-5 <br> pg. 9, last paragraph, pg. 11, ln. 13-15, pg. 11, ln. 23-27; <br> claims 1, 5, 9, 10, 11, 12, 13, 14 * <br> ----- | 1-15 | INV. <br> B60C99/00 <br> G06F30/15 <br> G06F30/20 <br><br> ADD. <br> G06F119/14 |
| X | ACOSTA MANUEL ET AL: "Tire lateral force estimation and grip potential identification using Neural Networks, Extended Kalman Filter, and Recursive Least Squares", <br> NEURAL COMPUTING AND APPLICATIONS, SPRINGER LONDON, LONDON, <br> vol. 30, no. 11, <br> 13 March 2017 (2017-03-13), pages 3445-3465, XP036641014, <br> ISSN: 0941-0643, DOI: 10.1007/S00521-017-2932-9 <br> [retrieved on 2017-03-13] <br> * abstract * <br> * section 2, par. 3 <br> pg. 3448, col. 1, par. 1 <br> section 3, par. 2 <br> section 4.5, par. 2; <br> figure 3; table 1 * <br> ----- <br> -/-- | 1-15 | |

TECHNICAL FIELDS SEARCHED (IPC)

B60C
G06F

The present search report has been drawn up for all claims

| Place of search | Date of completion of the search | Examiner |
|---|---|---|
| Munich | 26 June 2024 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

page 1 of 3

Europäisches
Patentamt
European
Patent Office
Office européen
des brevets

# EUROPEAN SEARCH REPORT

**Application Number**

EP 24 15 2414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KANWAR BHARAT SINGH ET AL: "Extended Pacejka Tire Model for Enhanced Vehicle Stability Control", ARXIV.ORG, CORNELL UNIVERSITY LIBRARY, 201 OLIN LIBRARY CORNELL UNIVERSITY ITHACA, NY 14853, 28 May 2023 (2023-05-28), XP091523070, * abstract * * section 4, pg. 17, 20-23; figures 27, 28, 30, 31 * | 1-15 | |
| X | WO 2022/214174 A1 (VOLVO TRUCK CORP [SE]) 13 October 2022 (2022-10-13) * abstract * * pg. 11, par. 1, 2 pg. 15, par. 4 * | 1-15 | |
| X | ALEXANDRE M RIBEIRO ET AL: "Estimation of Tire-Road Friction for Autonomous Vehicles: a Neural Network Approach", ARXIV.ORG, CORNELL UNIVERSITY LIBRARY, 201 OLIN LIBRARY CORNELL UNIVERSITY ITHACA, NY 14853, 1 August 2019 (2019-08-01), XP081453706, * abstract * * pg. 4, col. 1, par. 1-3, 5-6; figure 3 * | 1-15 | **TECHNICAL FIELDS SEARCHED (IPC)** |

-/--

The present search report has been drawn up for all claims

| Place of search | Date of completion of the search | Examiner |
|---|---|---|
| Munich | 26 June 2024 | Brandiska, Pavlina |

EPO FORM 1503 03.82 (P04C01)

Europäisches Patentamt

European Patent Office

Office européen des brevets

## EUROPEAN SEARCH REPORT

**Application Number**

EP 24 15 2414

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU X D ET AL: "Parameter identification for a LuGre model based on steady-state tire conditions", INTERNATIONAL JOURNAL OF AUTOMOTIVE TECHNOLOGY, THE KOREAN SOCIETY OF AUTOMOTIVE ENGINEERS, HEIDELBERG, vol. 12, no. 5, 19 August 2011 (2011-08-19), pages 671-677, XP019941878, ISSN: 1976-3832, DOI: 10.1007/S12239-011-0078-9 * abstract * * section 2, par. 1 section 2.2, par. 3, eq. 10 pg. 676, col. 1, par. 1, 2; table 3 * | 1-15 | |
| X | BRAGHIN F ET AL: "Identification of tire model parameters through full vehicle experimental tests", JOURNAL OF DYNAMIC SYSTEMS, MEASUREMENT AND CONTROL, A S M E INTERNATIONAL, US, vol. 133, no. 3, 1 January 2011 (2011-01-01), page 11pp, XP009158640, ISSN: 0022-0434, DOI: 10.1115/1.4003093 * abstract * * section 1, par. 2, 3 section 2, par. 1, 4, 5 section 3, par. 1, 3 pg. 3, col. 1, par. 2; figures 1, 8 * | 1-15 | TECHNICAL FIELDS SEARCHED (IPC) |

The present search report has been drawn up for all claims

| Place of search | Date of completion of the search | Examiner |
|---|---|---|
| Munich | 26 June 2024 | Brandiska, Pavlina |

EPO FORM 1503 03.82 (P04C01)

## ANNEX TO THE EUROPEAN SEARCH REPORT
## ON EUROPEAN PATENT APPLICATION NO.

EP 24 15 2414

This annex lists the patent family members relating to the patent documents cited in  the above-mentioned European search report.
The members are as contained in the European Patent Office EDP file on
The European Patent Office is in no way liable for these particulars which are merely given for the purpose of information.

26-06-2024

| Patent document cited in search report | Publication date | Patent family member(s) | Publication date |
|---|---|---|---|
| EP 4173906 A1 | 03-05-2023 | CN 118201832 A | 14-06-2024 |
| | | EP 4173906 A1 | 03-05-2023 |
| | | WO 2023073227 A1 | 04-05-2023 |
| WO 2022214174 A1 | 13-10-2022 | CN 117120283 A | 24-11-2023 |
| | | EP 4319996 A1 | 14-02-2024 |
| | | JP 2024517378 A | 22-04-2024 |
| | | KR 20230167362 A | 08-12-2023 |
| | | US 2024182041 A1 | 06-06-2024 |
| | | WO 2022214174 A1 | 13-10-2022 |

EPO FORM P0459

For more details about this annex : see Official Journal of the European Patent Office, No. 12/82

**REFERENCES CITED IN THE DESCRIPTION**

**Patent documents cited in the description**

- WO 2023073227 A1

**Non-patent literature cited in the description**

- **PROFESSOR H. PACEJKA**. *Tire and Vehicle Dynamics*, 1987